# FASCICULE DE BREVET EUROPEEN

(11) **EP 3 476 468 B1**
(45) Date de publication et mention de la délivrance du brevet: **27.03.2024**
(21) Numéro de dépôt: 18201735.0
(22) Date de dépôt: 22.10.2018
(51) Int. Cl.: B01J 3/00, B01J 19/24, C02F 11/08

(54) **DISPOSITIF POUR LA GAZEIFICATION EN MILIEU SUPERCRITIQUE D'UN EFFLUENT AQUEUX**
VORRICHTUNG FÜR DIE VERGASUNG IN EINEM SUPERKRITISCHEN MEDIUM EINES ABFLIESSENDEN ABWASSERS
GASIFICATION DEVICE IN A SUPERCRITICAL MEDIUM OF AN AQUEOUS EFFLUENT

(30) Priorité: 25.10.2017 FR 1760070
(43) Date de publication de la demande: 01.05.2019
(73) Titulaire: Commissariat à l'énergie atomique et aux énergies alternatives, 75015 Paris (FR)
(72) Inventeur: ROUBAUD, Anne, 38690 CHABONS (FR); CASTELLI, Pierre, 38330 SAINT-NAZAIRE LES EYMES (FR); ROUSSELY, Julien, 38250 LANS EN VERCORS (FR); TEXIER, Jonathan, 30126 TAVEL (FR)
(74) Mandataire: Brevalex

(56) Documents cités:
- EP-A1- 2 740 714
- WO-A1-2012/177907
- CN-A- 105 617 936
- US-A- 5 050 375

## Description

### DOMAINE TECHNIQUE ET ÉTAT DE LA TECHNIQUE ANTÉRIEURE

La présente invention se rapporte à un dispositif pour la gazéification en milieu eau supercritique d'un effluent aqueux contenant une matière organique et une matière minérale ainsi qu'à un procédé de gazéification utilisant un tel dispositif.

Dans les contextes actuels de développement durable, la valorisation de la matière organique provenant des déchets de l'industrie et/ou des bio-ressources à des fins énergétiques est devenue un enjeu majeur. Il est notamment essentiel de pouvoir valoriser les résidus organiques de l'industrie agricole, agro-alimentaire, ou encore de l'industrie papetière telles que la liqueur noire, issue de la préparation de la pâte à papier, ou les boues des stations d'épuration. Il est également intéressant de valoriser la biomasse, comme par exemple les algues (micro-algues ou macro-algues).

Cette matière organique à valoriser est, souvent, fortement humide et est, classiquement, recyclée par des procédés hydrothermaux. Le procédé consiste à convertir la matière organique en gaz combustible ou en huiles combustibles ou en liquides valorisables. Dans ce type de procédé, l'eau joue un rôle, à la fois, de milieu réactionnel et de réactif.

En particulier, le procédé de gazéification (transformation de la matière organique en gaz) tire profit des propriétés particulières de l'eau en conditions supercritiques (température supérieure à 374°C et pression supérieure à 22,1 MPa). Lorsque l'on se place dans de telles conditions, la constante diélectrique de l'eau diminue fortement ce qui permet de solubiliser la matière organique. La réaction d'hydrolyse avec l'eau conduit à la formation de gaz comprenant des combustibles énergétiques (N₂, O₂, CO₂, CO, H₂, CH₄...) et d'autres hydrocarbures légers, solubles dans l'eau. Ce procédé présente des cinétiques réactionnelles rapides en milieu homogène.

Cependant, dans ces conditions, des espèces minérales (inorganiques), présentes dans les effluents à traiter, vont précipiter sous forme de sels. Les sels formés doivent être évacués du réacteur pour éviter d'encombrer le milieu réactionnel.

Par exemple, le document EP-A-1903091 décrit un procédé de gazéification de la biomasse en eau supercritique. D'un côté de l'eau, dépourvue de sels inorganiques, est amenée à une pression supérieure à 22,1 MPa et chauffée à une température supérieure à 600°C et, de l'autre côté, la biomasse, contenant la matière inorganique dissoute, est amenée à une pression supérieure à 22,1 MPa et chauffée à une température plus modérée pour éviter la précipitation des sels inorganiques. La biomasse est ensuite mélangée avec l'eau, et est injectée dans un réacteur où de l'eau est supercritique pour réaliser la gazéification. Les sels inorganiques précipitent, et tombent par gravité dans la partie inférieure du réacteur, où l'eau est également supercritique, et où ils sont évacués du réacteur sous forme solide par un conduit d'évacuation ou un sépa rateu r.

Cependant, cette précipitation non désirée pose souvent des problèmes d'évacuation des sels car les sels, sous forme solide, peuvent boucher l'entrée et/ou la sortie de réacteur.

Dans le document JP-A-2000084576, la partie supérieure du réacteur de gazéification comprend un racleur pour retirer les sels inorganiques qui adhèrent à la paroi, et pour les faire tomber dans la partie inférieure du réacteur qui comprend un agent de précipitation. Tout le réacteur est à haute température et les sels sont collectés dans la partie inférieure du réacteur grâce à l'agent de précipitation qui permet de faire baisser le point de fusion du sel inorganique. Le réacteur comprend un système d'évacuation des sels fondus. Cependant, il est nécessaire de rajouter une nouvelle espèce chimique qui ne s'applique qu'à un seul composé et doit être adaptée pour chaque effluent à traiter. La présence de cet agent de précipitation peut nécessiter une étape additionnelle de séparation et/ou de recyclage des composés de l'effluent en aval du réacteur.

Une autre solution, décrite dans le document WO-A-2011/154226, consiste à séparer les sels inorganiques de l'effluent à traiter en amont du réacteur de gazéification. Cette séparation nécessite l'utilisation de filtre qu'il est nécessaire de changer et/ou de nettoyer régulièrement, ce qui augmente les coûts de réalisation du procédé et rajoute une étape de maintenance. CN105617936 D1 divulgue un dispositif et un procédé pour la gazéification en milieu supercritique d'un effluent aqueux sous forme de boue contenant une matière organique et une matière minérale, dans un réacteur comprenant une partie supérieure formée par des tuyaux concentriques de réaction, munie d'une entrée de l'effluent aqueux, et une partie inférieure munie d'une sortie d'un mélange eau/gaz, la zone inférieure de la partie inférieure étant munie d'une sortie de liquide, des moyens de refroidissement pour refroidir la zone inférieure du réacteur à une température sous-critique, des moyens de régulation de la pression pour mettre le réacteur à une pression supérieure ou égale à 22,1 MPa sont aussi présent.

### EXPOSÉ DE L'INVENTION

C'est, par conséquent, un but de la présente invention de proposer un dispositif de gazéification d'un effluent aqueux, en milieu supercritique, évitant les problèmes d'accumulation et/ou de bouchage du milieu réactionnel par les sels inorganiques et, en même temps, permettant de séparer facilement les sels inorganiques des autres composés de l'effluent aqueux à des fins de valorisation, sans avoir besoin d'utiliser des filtres en amont du réacteur et/ou d'ajouter une espèce chimique pour faire précipiter les sels inorganiques.

Ce but est atteint par un dispositif utilisable pour la gazéification en milieu supercritique d'un effluent aqueux contenant une matière organique et une matière minérale, le dispositif comprenant :
- un réacteur comprenant un corps principal configuré pour être rempli d'eau,
- des moyens de régulation de la pression pour mettre le corps principal du réacteur à une pression supérieure ou égale à 22,1 MPa,
- des moyens de chauffage configuré pour chauffer une partie supérieure du réacteur à une température allant de 400°C à 800°C, de manière à avoir de l'eau à l'état supercritique,
- une entrée de l'effluent aqueux aboutissant dans la partie supérieure du réacteur, de manière à transformer la matière organique de l'effluent aqueux en gaz,
- des moyens de refroidissement, disposés autour du corps principal du réacteur, configurés pour refroidir une partie inférieure du réacteur, la partie inférieure du réacteur étant refroidie selon un gradient thermique allant d'une première température inférieure ou égale à celle de la partie supérieure du réacteur et supérieure ou égale à 374°C pour avoir de l'eau à l'état supercritique à une deuxième température inférieure à 374°C, de manière à avoir de l'eau à l'état liquide et solubiliser la matière minérale,
- une sortie d'un mélange eau/gaz, positionnée au niveau de la partie inférieure du réacteur à une température inférieure ou égale à celle de la partie supérieure du réacteur et supérieure ou égale à 374°C pour avoir de l'eau à l'état supercritique,
- une sortie de liquide, positionnée au niveau de la partie inférieure du réacteur, refroidie à une température inférieure à 374°C de manière à évacuer du réacteur une saumure contenant la matière minérale solubilisée et de l'eau à l'état liquide,
la partie supérieure et la partie inférieure du réacteur étant tubulaires et disposées co-axialement.

Par sortie de mélange eau/gaz, on entend ici une sortie permettant de récupérer le gaz en mélange avec l'eau en conditions supercritiques.

Par de l'eau en conditions supercritiques, de l'eau à l'état supercritique ou de l'eau supercritique, on entend de l'eau à une température supérieure à 374°C et à une pression supérieure à 22,1 MPa.

Par sortie de liquide, on entend ici une sortie permettant de récupérer la partie liquide contenant les sels inorganiques dissouts (saumure). Le liquide est en conditions sous-critiques.

Par conditions sous-critiques, on entend de l'eau dans des conditions telles qu'elle est à l'état liquide. Par gaz, on entend un gaz ou un mélange de gaz.

L'invention se distingue fondamentalement de l'art antérieur par la présence d'une zone froide dans la partie inférieure. La matière inorganique précipite, sous forme de sels, dans la zone supérieure du réacteur et tombe par gravité dans la partie inférieure du réacteur, plus froide, où elle est resolubilisée et où elle peut être évacuée. Dans le dispositif de l'invention, il n'y a pas besoin de filtrer la matière inorganique en amont du réacteur ni d'ajouter un agent de précipitation pour faire précipiter les sels. Les sels sont récupérés sous forme d'un mélange liquide facile à évacuer et facilement valorisable.

Avantageusement, le dispositif comprend des moyens de guidage allant de la jonction entre la partie supérieure et la partie inférieure jusqu'à la zone centrale de partie inférieure, de manière à ce que le gaz et la matière minérale arrivent dans la partie inférieure du réacteur au niveau de la zone centrale. La présence des moyens de guidage jusqu'à la zone centrale, permet d'amener au plus près les sels précipités vers la zone froide, et éviter qu'ils sortent directement par la sortie gaz, cela conduit à une meilleure séparation des sels du mélange gazeux. Les gaz mélangés à l'eau supercritique remontent jusqu'à la zone supérieure de la partie inférieure où ils sont évacués. Les gaz remontent naturellement et/ou du fait de l'écoulement.

Avantageusement, la sortie de mélange eau/gaz est reliée à un système de séparation haute pression.

Avantageusement, le système de séparation haute pression est relié à un système de séparation basse pression.

Avantageusement, un échangeur thermique est disposé entre la sortie de mélange eau/gaz et le système de séparation haute pression. L'échangeur thermique permet de refroidir la sortie de mélange eau/gaz en sortie du réacteur, et de permettre à l'eau supercritique de passer en phase liquide et aux gaz incondensables de rester sous forme de gaz.

Avantageusement, le réacteur comprend une canne d'injection pour injecter l'effluent aqueux dans la partie supérieure du réacteur, la canne d'injection traversant la partie inférieure du réacteur et aboutissant dans la partie supérieure du réacteur. La canne d'injection permet d'effectuer un préchauffage de l'effluent aqueux par échange de chaleur avec le milieu réactionnel déjà présent dans le réacteur.

Avantageusement, le dispositif est dépourvu de moyens d'agitation. Les sels précipitent dans la partie supérieure et tombent naturellement par gravité jusque dans la partie inférieure du réacteur où ils sont solubilisés. Le mélange gazeux est entraîné par le chemin d'écoulement allant de l'entrée de l'effluent aqueux jusqu'à la sortie de mélange eau/gaz.

L'invention concerne également un procédé de valorisation des effluents, par gazéification, utilisant un dispositif de gazéification tel que précédemment décrit. La mise en oeuvre du procédé de gazéification en milieu supercritique d'un effluent aqueux contenant une matière organique et une matière minérale, comprend les étapes successives suivantes :
a) fourniture d'un dispositif tel que défini précédemment, le réacteur étant rempli d'eau, à une pression supérieure ou égale à 22,1 MPa, par exemple allant de 22,1 à 40,0 MPa,
b) chauffage de la partie supérieure du réacteur, de manière à avoir de l'eau en conditions supercritiques et à une température allant de 400°C à 800°C,
c) refroidissement de la zone inférieure de la partie inférieure du réacteur, de manière à avoir de l'eau liquide à une température inférieure à 374°C,
d) injection de l'effluent aqueux dans la partie supérieure du réacteur, de manière à gazéifier la matière organique, la matière minérale précipitant dans partie supérieure du réacteur et tombant par gravité dans la partie inférieure du réacteur, où elle est resolubilisée pour former une saumure,
e) récupération des gaz par la sortie de mélange eau/gaz.

Le procédé présente les avantages liés au dispositif.

Le procédé possède un rendement de conversion de la matière organique proche de 90 %. Le procédé aboutit, en sortie, à un effluent aqueux dont la teneur en sels est réduite et contenant un mélange de gaz combustible valorisable tel que CO et H₂ et/ou CH₄. La réduction de la teneur en sels peut atteindre jusqu'à 90 % massique.

Avantageusement, le procédé comporte une étape additionnelle dans laquelle la saumure est évacuée par la sortie de liquide. La saumure peut être ensuite recyclée, valorisée.

Avantageusement, lors de l'étape b), la partie supérieure est chauffée à une température allant de 500°C à 700°C, et de préférence de 600°C à 700°C. Une température supérieure à 600°C favorise la formation de dihydrogène et améliore le rendement de gazéification.

Avantageusement, lors de l'étape b), la zone inférieure de la partie inférieure est refroidie à une température inférieure à 350°C, et de préférence inférieure à 250°C, par exemple à une température de 20°C à 250°C.

Avantageusement, le réacteur comprend un catalyseur. Le rendement de gazéification est ainsi amélioré ou la composition du gaz modifiée.

Avantageusement, un oxydant, tel que de l'air ou de l'oxygène, est injecté dans la partie supérieure du réacteur de manière à réaliser une réaction d'oxydation hydrothermale au moins partielle de la matière organique de l'effluent aqueux. Cette réaction étant exothermique, l'apport d'énergie extérieur, nécessaire pour chauffer la zone de réaction, sera diminué. Par oxydant, on entend un gaz ou un liquide pouvant oxyder la matière organique que l'on peut ajouter dans le réacteur en plus de l'effluent aqueux et de l'eau nécessaire au procédé de gazéification. L'oxydant peut être injecté sous forme, par exemple, d'oxygène gazeux ou liquide, de peroxyde d'hydrogène. L'oxydant introduit peut être injecté en quantité sous-stoechiométrique afin de n'oxyder qu'une partie de la matière organique. Il peut également être injecté en conditions stoechiométriques pour oxyder toute la matière organique.

Selon une variante, la gazéification est réalisée sans catalyseur, sans oxydant et sans agent de précipitation. Le procédé est plus simple à mettre en oeuvre, moins coûteux en terme de réactifs, d'appareillages et/ou de maintenance.

Avantageusement, la sortie de mélange eau/gaz est reliée à un système de séparation, pour séparer l'eau du gaz, et l'eau est récupérée en sortie du système de séparation pour être réinjectée dans le réacteur en mélange avec l'effluent aqueux. L'eau en sortie du réacteur est ainsi recyclée, ce qui limite le coût en réactif et en traitement des effluents en sortie de procédé.

Avantageusement, la sortie de mélange eau/gaz est reliée à un échangeur thermique et la chaleur récupérée de l'échangeur thermique est utilisée pour chauffer l'effluent aqueux à une température maximale de 350°C et de préférence à une température maximale de 250°C. L'effluent aqueux est ainsi préchauffé en amont du réacteur.

Avantageusement, l'effluent aqueux comprend de 75 % à 95 % massique d'eau, de 5 % à 25 % massique de matière organique et jusqu'à 30 g/L de matière minérale.

Avantageusement, la viscosité de l'effluent aqueux va de 1 à 1000 mPa.s et/ou la masse volumique de l'effluent va de 0,8 à 1,5 g/cm³, et de préférence de 0,8 à 1,3 g/cm³. De telles viscosités et/ou masses volumiques sont adaptées pour permettre le pompage de l'effluent aqueux.

Avantageusement, l'effluent aqueux est une boue de stations d'épuration, une liqueur noire, une solution comprenant des algues, de la vinasse, ou un résidu de l'industrie agroalimentaire tel que le lactosérum. Ces bio-ressources ou bio-déchets sont humides et particulièrement adaptées au procédé de gazéification en eau supercritique.

### BRÈVE DESCRIPTION DES DESSINS

La présente invention sera mieux comprise sur la base de la description qui va suivre et des dessins en annexe sur lesquels:
- la figure 1 est une représentation schématique d'une vue, en coupe et de profil, d'un dispositif de gazéification d'un effluent aqueux en milieu supercritique, selon un premier mode de réalisation particulier de l'invention,
- la figure 2 est une représentation schématique d'une vue, en coupe et de profil, d'un dispositif de gazéification d'un effluent aqueux en milieu supercritique, selon un deuxième mode de réalisation particulier de l'invention.

Les différentes parties représentées sur la figure ne le sont pas nécessairement selon une échelle uniforme, pour rendre les figures plus lisibles.

### EXPOSÉ DÉTAILLÉ DE MODES DE RÉALISATION PARTICULIERS

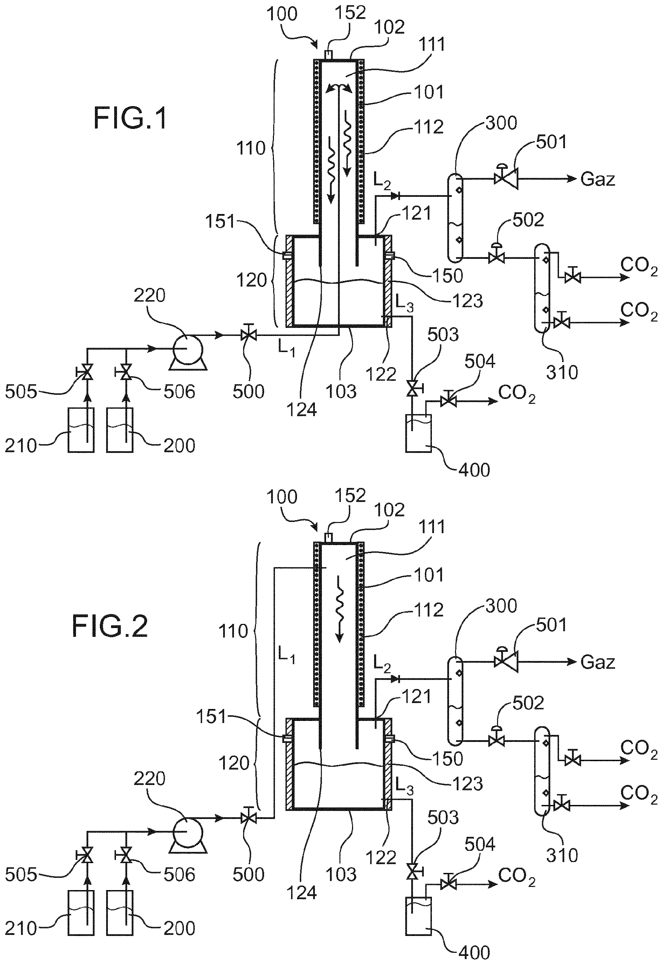

On se réfère aux figures 1 et 2 qui représentent un dispositif de gazéification, aussi appelé, installation de gazéification comprenant, dans ces exemples de réalisation :
- un réacteur de gazéification 100, relié à une ligne d'injection des réactifs (ligne 1, référencée L1), à une ligne d'extraction de l'eau et des gaz formés (ligne 2, référencée L2) et à une ligne de récupération des sels dissous (ligne 3, référencée L3),
- des cuves de stockage des réactifs : une cuve de stockage de la matière à traiter 200, et une cuve stockage de l'eau 210,
- un moyen de régulation du débit 220, par exemple sous la forme d'un système d'injection sous pression 220 reliés, d'une part, en amont aux cuves de réactif 200 et 210, et, d'autre part, au réacteur 100 via la ligne d'injection L1,
- un moyen de régulation de pression, par exemple par l'action d'une vanne de régulation, ou d'un déverseur, ou de tout autre moyen de décharge sur la ligne de sortie des gaz L2,
- des moyens de régulation de la température : un moyen de régulation pour chauffer le réacteur 112 et un moyen de régulation pour refroidir le réacteur 123.

### Réacteur :

Le réacteur 100 comprend un corps principal comprenant une paroi latérale 101, de préférence de forme tubulaire, et deux extrémités (un fond 103 et un sommet 102).

Le réacteur comprend une partie supérieure 110 dite chaude et une partie inférieure 120 dite froide.

La partie supérieure 110 est munie d'une entrée d'effluent aqueux 111, reliée à la ligne d'injection L1. La partie supérieure 110 du réacteur 100 forme la zone de gazéification. Lors de la réaction de gazéification, l'eau dans cette partie 110 est en conditions supercritiques (T>374°C et P>22,1 MPa) de manière à transformer la matière organique en gaz. De telles conditions de températures conduisent également à la précipitation de la matière inorganique présente dans l'effluent aqueux.

Avantageusement, le procédé est réalisé sans catalyseur, ce qui améliore les coûts et facilite la maintenance du réacteur notamment dus à la désorption des sels du catalyseur.

La partie inférieure 120 du réacteur 100 forme la zone de solubilisation de la matière inorganique et la zone de récupération des gaz. La partie inférieure est refroidie par des moyens de refroidissement 123.

La partie inférieure 120 comprend une zone supérieure, une zone centrale, et une zone inférieure.

La zone supérieure de la partie inférieure 120 est en contact avec la partie supérieure 110 du réacteur 100 et est munie d'une sortie de mélange eau/gaz 121, reliée à la voie d'extraction de l'eau et des gaz formés L2. La zone supérieure est à une température inférieure ou égale à celle de la partie supérieure 110. Elle est à une température d'au moins 374°C pour pouvoir récupérer un mélange eau/gaz homogène.

La zone centrale est une zone de transition avec un fort gradient de température, sa température est inférieure à celle de la zone supérieure et supérieure à celle de la zone inférieure. La température de la zone centrale est, par exemple, à une température allant de 250°C à 500°C, telle que de 350°C à 374°C.

La zone inférieure est à une température inférieure à 374°C pour solubiliser la matière inorganique. Elle est de préférence à une température inférieure à 350°C, et encore plus préférentiellement à une température inférieure à 250°C.

La zone inférieure est munie d'une sortie de liquide 122, reliée à la voie de récupération des sels dissous L3 en aval du réacteur 100 de gazéification.

Des moyens de guidage 124 sont, avantageusement, positionnés au niveau de la jonction entre la partie supérieure 110 et la partie inférieure 120. Les moyens de guidage 124 se prolongent jusqu'à la zone centrale de partie inférieure 120, de manière à ce que le gaz et la matière minérale sous forme de précipité arrivent dans la partie inférieure 120 du réacteur au niveau de la zone centrale.

La partie supérieure 110 et la partie inférieure 120 sont, de préférence, tubulaires et disposées co-axialement. Elles peuvent avoir le même diamètre ou des diamètres différents. De préférence, le diamètre de la partie supérieure 110 est inférieur au diamètre de la partie inférieure 120. Selon un mode de réalisation particulièrement avantageux, représenté sur la figure 1, le tube de la partie supérieure 110 pénètre dans le tube de la partie inférieure 120. Ce prolongement forme les moyens de guidage 124.

Le corps principal du réacteur 100 est en un matériau pouvant résister aux contraintes thermiques (température dans le réacteur pouvant aller jusqu'à 800°C, voire plus), mécaniques (pression pouvant aller jusqu'à 40,0 MPa, voire plus) et chimiques (espèces gazeuses et sels minéraux). Il est, par exemple, en acier inoxydable.

Il est possible d'utiliser une protection de type chemisage ou une couche de passivation par exemple, pour améliorer la résistance à la corrosion.

Le réacteur 100 peut comporter des brides (non représentées) pour la maintenance, ainsi que un ou plusieurs piquages 150, 151, 152 permettant de former des entrées/sorties de réactifs/produits, et/ou d'insérer des instruments pour contrôler la température et/ou la pression au sein du réacteur 100.

Le réacteur a, de préférence, une forme longitudinale.

Il s'agit d'un réacteur vertical pour que les sels qui précipitent dans la partie supérieure 110 chaude puissent descendre naturellement par gravité jusqu'à la partie inférieure 120 plus froide et être resolubilisés.

Le réacteur 100 a une hauteur pouvant aller jusqu'à quelques mètres, par exemple 2 m. La hauteur et le diamètre du réacteur 100 dépendent de plusieurs paramètres, notamment du débit et du temps de séjour de l'effluent à traiter, ainsi que des contraintes mécaniques et thermiques.

La partie supérieure 110 du réacteur 100 formant la zone réactionnelle peut avoir un volume utile de quelques litres, par exemple 2 L. Le diamètre interne du réacteur 100 est, par exemple, de quelques centimètres, par exemple de l'ordre de 5 cm. La partie inférieure 120 du réacteur 100 peut avoir un volume utile de l'ordre de 500 mL. Par exemple, avec des débits respectifs allant de 10 kg/h à 0,5 kg/h, les temps de séjours dans le réacteur vont de 1 minute à 20 minutes. Ces éléments dimensionnels sont donnés à titre indicatif, et non limitatif, pour un dispositif expérimental à l'échelle d'un petit pilote.

Le réacteur 100 peut comprendre des moyens d'agitation, comme un arbre tournant avec des éléments rotatifs.

Avantageusement, le réacteur 100 est dépourvu de moyen d'agitation. Le dimensionnement et le flux de l'effluent aqueux au sein du réacteur suffisent à obtenir une bonne homogénéisation du milieu et les sels précipités tombent par gravité vers le fond 103 du réacteur 100.

### Chauffage de la partie supérieure du réacteur :

La partie supérieure 110 est munie de moyens de chauffage 112 recouvrant au moins en partie, et éventuellement totalement, la paroi latérale 101 au niveau de la partie supérieure 110 du réacteur 100.

La partie supérieure 110 du réacteur 100 est chauffée, de préférence, préalablement à l'injection de l'effluent aqueux à traiter, pour transformer l'eau en eau supercritique. De préférence, le chauffage est réalisé de manière à avoir de l'eau à une température supérieure à 374°C, par exemple de 400°C à 800°C, préférentiellement de 500°C à 700°C et de manière encore plus préférentiellement de 600°C à 700°C.

De préférence, la température dans la partie supérieure 110 ne varie pas de plus de 10°C.

La partie supérieure 110 du réacteur 100 peut être chauffée par des moyens de chauffage 112 extérieurs, positionnés autour du corps principal. Il peut s'agir d'une coquille chauffante. Les moyens de chauffage 112 sont, par exemple, colliers chauffants en céramique. Selon une variante, la paroi 101 du réacteur 100 peut former une double enveloppe, dans laquelle circule un fluide chaud. Selon une autre variante, le chauffage peut être interne au réacteur, par des cannes chauffantes par exemple.

La vitesse moyenne de montée en température est, par exemple, de 5°C/min.

Selon une variante, un apport de chauffage est effectué par oxydation partielle de la matière organique à l'intérieur du réacteur. Un flux d'air ou un flux d'oxygène peut être injecté dans la partie supérieure 110 du réacteur 100. La réaction d'oxydation hydrothermale étant exothermique, de la chaleur est formée in situ dans le réacteur 100.

### Refroidissement de la partie inférieure du réacteur :

L'eau dans la zone inférieure de la partie inférieure 120 doit être à l'état liquide et à une température inférieure à 374°C pour solubiliser les sels. De préférence, la température dans la zone inférieure de la partie inférieure 120 va de 100°C à 250°C, de préférence de 150°C à 250°C.

L'eau supercritique dans la zone supérieure de la partie inférieure 120 peut être refroidie à une température inférieure à la température de la partie supérieure 110 mais supérieure à 374°C.

Un équilibre thermique est obtenu dans la zone centrale de la partie inférieure 120, autour de la température critique de 374°C.

Les moyens de refroidissement 123 peuvent être positionnés autour du corps principal du réacteur 100, au niveau de la partie inférieure 120. Selon une variante, la partie inférieure 120 du réacteur 100 peut être refroidie, par exemple, par circulation d'un fluide froid dans une double enveloppe au niveau de la partie inférieure 120. La régulation du débit et/ou de la température du fluide de refroidissement permettra par exemple d'ajuster la température de la partie inférieure 120.

Les moyens de refroidissement 123 recouvrent au moins en partie, et éventuellement totalement, la paroi latérale 101 au niveau de la partie inférieure 120 du réacteur 100.

### Mise sous pression du réacteur :

Le débit est avantageusement généré grâce à un système d'injection 220 (pompe haute pression), relié à une cuve d'eau 210.

La pression dans le réacteur 100 est régulée sur la ligne de sortie L2, par l'élément 501 présent sur la sortie des gaz incondensables. La pression peut être régulée, par exemple, avec un système de type déverseur ou vanne de réglage 501.

L'eau injectée pour mettre en condition de pression et température le réacteur est, de préférence, de l'eau déminéralisée.

L'eau est stockée à température ambiante et pression atmosphérique. La cuve 210 a par exemple un volume allant de 10 L à 100 L, par exemple 30 L.

Le basculement sur la cuve 200 de l'effluent à traiter est réalisé, dès que les conditions opératoires de débit, de pression et de températures sont atteintes avec l'eau de la cuve 210.

Tant que la matière organique à traiter n'est pas injectée, il n'y a pas de gaz produits. Pendant cette phase, la régulation de pression peut s'effectuer sur la ligne de sortie liquide L2 par la vanne de réglage 502. Lorsque la matière organique à traiter est injectée la vanne 502 permet de réguler le niveau de l'interface liquide du séparateur haute pression 300.

Lorsque le réacteur est mis sous pression, pour mettre en oeuvre la réaction de gazéification, toute l'enceinte du réacteur (partie supérieure et partie inférieure) est à la même pression. La pression dans le réacteur est supérieure à 22,1 MPa, par exemple de 22,1 MPa à 40 MPa, de préférence de 22,1 MPa à 30,0 MPa, et encore plus préférentiellement de 25,0 MPa à 30,0 MPa.

La pression est maintenue durant toute la durée de la réaction, et jusqu'à son refroidissement.

Le débit est ajusté pour permettre un temps de séjour suffisant dans la zone réactionnelle.

### Effluent aqueux :

Le mélange à traiter est un effluent aqueux, contenant par exemple de 75 % à 95 % massique d'eau.

L'effluent aqueux comprend au moins 5 % massique de matière organique. Il peut contenir jusqu'à 25 % massique de matière organique. La matière organique peut être sous la forme de particules en suspension. Les particules solides organiques ont, avantageusement, une plus grande dimension d'une taille maximale de 200 µm.

L'effluent contient une matière minérale (matière inorganique). La matière minérale peut être sous la forme de sels dissous. Les sels inorganiques sont, par exemple, du chlorure de sodium, des phosphates, ou encore des nitrates. L'effluent peut également contenir de la soude. La concentration en soude est, de préférence, inférieure à 5 % massique. La concentration en sels inorganiques est, de préférence inférieure à 30 % massique, et encore plus préférentiellement inférieure à 3 % massique.

La viscosité de l'effluent va, de préférence, de 1 à 1000 mPa.s. La masse volumique de l'effluent va, de préférence, de 0,8 à 1,5 g/cm³, et de préférence de 0,8 à 1,3 g/cm³. Dans le cas où l'effluent aqueux fourni est trop visqueux et/ou ayant une masse volumique trop élevée, il pourra être dilué.

La vitesse de sédimentation de la matière organique de l'effluent aqueux est, avantageusement, inférieure à 1 cm/s.

Le pH de la solution est, avantageusement, inférieur à 12.

L'effluent aqueux peut provenir de la biomasse, qui présente un taux d'humidité élevé, être issu du traitement des boues (station d'épuration par exemple) ou être un déchet aqueux de l'industrie agricole ou agroalimentaire. A titre illustratif et non limitatif, il peut s'agir de boues de stations d'épuration, de liqueur noire, de micro-algues en solution, d'une phase aqueuse de liquéfaction hydrothermale, de vinasse, d'huile oléagineuse, d'un effluent résultant d'un procédé de méthanisation, de résidus de l'industrie agroalimentaire tel que le lactosérum.

L'effluent aqueux est stocké dans une cuve de stockage 200, en amont du réacteur 100. La matière à traiter pouvant contenir des particules solides, la cuve 200 est, avantageusement, équipée d'un agitateur permettant de maintenir une homogénéité de la solution. Cette cuve 200 est à température ambiante (20-25°C) et pression atmosphérique (environ 0,1 MPa).

La cuve 200 a, par exemple, un volume allant de 10 L à 100 L, par exemple 30 L.

Le matériau de la cuve 200 sera choisi par l'homme du métier de manière à résister à la corrosion de l'air, de l'eau et de la matière à traiter.

### Injection de l'effluent aqueux :

L'effluent aqueux est injecté sous pression dans la partie supérieure 110 du réacteur 100 (figures 1 et 2). L'effluent aqueux est injecté dans le réacteur à une pression identique à celle à l'intérieur du réacteur.

L'effluent aqueux peut être injecté à température ambiante. L'effluent aqueux peut éventuellement être préchauffé à des températures inférieures ou égales à 250°C.

Selon un mode de réalisation non représenté, l'injection peut être réalisée au sommet 102 du réacteur par une ligne d'injection reliée au piquage 152.

Selon un mode de réalisation particulier, représenté sur la figure 1, l'effluent aqueux est injecté dans le réacteur 100 par une canne d'injection (aussi appelé tube d'injection ou tube plongeur). La canne d'injection forme l'entrée d'effluent aqueux 111. L'effluent à traiter arrive par le tube de la canne d'injection 111 en bas de réacteur, remonte le long du tube et sort en haut du tube, dans la zone de réaction 110 du réacteur 100, où l'eau est supercritique.

La canne d'injection 111 est, de préférence, cylindrique et centrée axialement dans le réacteur. Le diamètre de la canne d'injection 111 est inférieur au diamètre du corps principal du réacteur 100. Son diamètre peut être de l'ordre de quelques millimètres, ou quelques centimètres, en fonction de la taille du réacteur et/ou du débit souhaité.

La canne d'injection 111 est en un matériau résistant aux contraintes chimiques (matière à traiter) et thermique (elle doit rester rigide avec la température).

Selon un autre mode de réalisation particulier, représenté sur la figure 2, l'effluent à traiter est injecté directement par le haut du réacteur depuis la ligne d'injection, sans remonter le long d'un tube d'injection. L'entrée d'effluent aqueux 111 est située dans la paroi de la partie supérieure 110 du réacteur 100, par exemple dans la paroi latérale 101.

Le débit peut être régulé automatiquement, par exemple asservi par un débitmètre, entre 0,5 et 10 kg/h.

Lorsque la matière organique est injectée dans la partie supérieure 110 du réacteur 100, la matière organique est gazéifiée et produit un mélange composé principalement de CO₂ et de CH₄ et/ou de H₂.

La fraction minérale de l'effluent précipite dans la zone chaude 110, qui est en conditions supercritiques, et est entraînée par gravité et/ou par l'écoulement dans la zone inférieure de la partie inférieure 120 du réacteur 100. La partie inférieure 120 du réacteur est à la même pression que la partie supérieure 110 mais elle est à une température inférieure à la température critique de l'eau. Dans la zone inférieure froide de la partie basse du réacteur 120, les sels vont être piégés et resolubilisés.

### Récupération des gaz :

Les gaz formés lors de la gazéification de la matière organique sont évacués au niveau de la zone supérieure de la partie inférieure 120 du réacteur 100 via la sortie de mélange eau/gaz 121. Cette zone est adjacente à la partie supérieure et est à une température supérieure à la température critique (supérieure à 374°C) mais qui peut être inférieure à la température de la partie supérieure du réacteur 100. Les gaz sont évacués sous la forme d'un mélange eau supercritique/gaz.

Selon un mode de réalisation particulier non représenté, la ligne de sortie L2 comprend un échangeur thermique pour refroidir le mélange gazeux avant le séparateur 300. Le mélange gazeux ainsi refroidi permet d'obtenir une phase liquide composée essentiellement par de l'eau condensée et une phase de gaz incondensable.

Les gaz incondensables formés peuvent être H₂, CH₄, CO₂, CO, et des hydrocarbures tels que C₂H₆, C₂H₄, ou encore C₃H₈.

Le mélange eau/gaz en sortie du réacteur peut contenir une faible teneur en sels minéraux. Cette teneur est nettement inférieure à la teneur en sels minéraux en entrée de réacteur. La réduction de la teneur en sels peut atteindre jusqu'à 90 % massique. Elle est de préférence d'au moins 80 % massique. La phase aqueuse en sortie est ainsi nettoyée (d'au moins 80 %) de sa fraction minérale.

Un ou plusieurs séparateurs 300, 310 peuvent être utilisés pour séparer les gaz en sortie. Par exemple, le CO₂ peut être séparé des autres gaz valorisables. Par exemple, deux séparateurs 300, 310 différents peuvent être utilisés. Le dispositif peut comprendre deux séparateurs en série, un séparateur haute pression 300 et un séparateur basse pression 310 préférentiellement pour le CO₂.

Le séparateur haute pression 300 est à la même pression que le réacteur 100 mais il est à température ambiante (typiquement de l'ordre de 20-25°C). Par exemple, les gaz H₂ ou CH₄ sont séparés et évacués du système par le haut du séparateur 300 via l'élément 501. La phase liquide comprenant le CO₂ et l'eau, est détendue, et envoyée vers le séparateur basse pression 310 via l'élément 502. Le séparateur basse pression 310 est, par exemple, régulé à 0,5MPa. Dans ce séparateur, le CO₂ devient gazeux et est séparé de l'eau. L'eau est évacuée par le bas du séparateur 310 et le CO₂ sort par le haut du séparateur 310.

### Evacuation de la matière minérale :

La matière minérale est évacuée sous la forme d'une saumure (mélange eau + sels dissous) jusqu'à une cuve de récupération 400 via la sortie de liquide 122.

L'évacuation se fait dans la zone inférieure de la partie inférieure 120, par exemple via un piquage positionné sur la paroi du réacteur ou dans le fond du réacteur.

Le système d'extraction peut comprendre un élément pour refroidir la saumure (à 40 °C maximum) puis pour réaliser sa détente à pression atmosphérique.

Une vanne 503 peut être disposée, en aval du système de détente, pour vidanger le liquide qui est ensuite recueilli dans une cuve 400 dédiée.

La vidange peut se faire soit en continu soit à intervalles réguliers pendant le fonctionnement en continu du procédé soit après une campagne de traitement.

La partie inférieure 120 du réacteur 100 est dimensionnée pour contenir la charge minérale accumulée entre deux intervalles de purge des sels. La taille de la partie inférieure 120 du réacteur 100 sera dimensionnée par l'homme du métier pour que les sels soient à une concentration telle qu'ils sont solubles dans l'eau, c'est-à-dire à une concentration inférieure à leur limite de solubilité dans l'eau, pour une température égale à celle de la partie inférieure 120 du réacteur 100.

Le dispositif de gazéification peut également comprendre un support catalytique (nickel ou ruthénium par exemple) pour augmenter les rendements de conversion.

Le dispositif de gazéification peut également comprendre des équipements et des instruments pour réguler automatiquement la pression du réacteur jusque 40,0 MPa voire plus, et pour assurer la dépressurisation du flux sortant, pour une pression en aval allant par exemple de 0,1 à 0,5 MPa absolus.

Le dispositif peut également comprendre équipements de sécurité, comme des soupapes par exemple.

Le dispositif peut également comprendre comme équipement de régulation des vannes de réglage 501 ou des déverseurs pour assurer la régulation de la pression au sein du réacteur.

Le dispositif peut également comprendre des vannes d'arrêt (référencées 500 à 506) pour ouvrir/fermer les lignes de réactifs ou de produits.

Un châssis, non représenté, peut être utilisé pour supporter l'ensemble.

Nous allons maintenant décrire, plus en détail, un mode de réalisation particulier du procédé de gazéification en milieu supercritique d'un effluent aqueux contenant une matière organique et une matière minérale. Le procédé comporte les étapes suivantes :
- fourniture d'un réacteur 100 de réaction tel que défini précédemment,
- remplissage de la cuve de stockage de la matière à traiter 200 avec l'effluent à traiter,
- remplissage de la cuve d'eau 210, avec de préférence de l'eau déminéralisée,
- montée en pression du réacteur 100 avec l'eau, grâce aux systèmes de pompage en amont du réacteur et de régulation de pression en aval,
- chauffage de la partie supérieure 110 du réacteur 100, de manière à avoir de l'eau à une température supérieure à 374°C, par exemple allant de 400°C à 800°C,
- refroidissement de la partie inférieure 120 du réacteur 100, de manière à avoir de l'eau liquide dans la zone inférieure à une température inférieure à 374°C,
- atteinte des conditions opératoires (débit, pression et température),
- fermeture de la ligne reliée à la cuve d'eau,
- ouverture de la ligne reliée à la cuve de stockage 200 contenant l'effluent à traiter, de manière à l'injecter dans le réacteur 100 et à réaliser la réaction de gazéification (les gaz, formés lors de la réaction de gazéification dans la partie supérieure, se mélangent à l'eau supercritique pour ne former qu'une phase homogène ; les sels présents dans l'effluent deviennent insolubles, précipitent et tombent par gravité vers le fond du réacteur, dans la partie inférieure 120 refroidie, ce qui conduit à la resolubilisation des sels dans la zone inférieure de la partie inférieure 120 du réacteur 100),
- évacuation des gaz formés en mélange dans l'eau supercritique par la ligne 2, après refroidissement, sous forme de solution (mélange de gaz et d'eau) vers la zone de séparation,
- extraction de la saumure via la sortie de liquide jusqu'à la cuve de récupération 400.

Le temps de séjour dans le réacteur 100 est, avantageusement, maintenu jusqu'au régime stationnaire. Le régime stationnaire peut être déterminé par une analyse en temps réel des gaz formés.

### Exemples illustratifs et non limitatifs d'un mode de réalisation :

Les premiers résultats ont été obtenus avec un mélange comprenant de l'éthanol (10 % massique) et des carbonates de sodium (22 g/L de sodium) pour simuler la composition d'un effluent à traiter. Le débit est de 5 kg/h et la pression au sein du réacteur 100 de 28 MPa. La composition volumique du mélange gazeux en sortie est la suivante : 50 % de H₂, 25 % de CH₄ et 25 % de CO₂. La réaction globale est : C₂H₅OH + H₂O → CO₂ + CH₄ + H₂.

Le rendement en gaz de la matière organique est de 83 %. Il est proche de 100 % pour un débit de 3 kg/h d'éthanol à 10 % massique (i.e. soit un débit de 300 g/h d'éthanol pur).

Les résultats obtenus montrent la faisabilité du procédé de gazéification sans observer d'accumulation de sels inorganiques dans la ligne L2 de sortie du réacteur.

Dans l'exemple suivant, de la liqueur noire, résidu de l'industrie papetière, a été valorisée. La liqueur noire contient 18,5 % de matière sèche (lignine d'épicéa, hémicellulose), 26 g/L de sodium. Le débit est de 1,4 à 3,5 kg/h.

La température de la partie supérieure 110 du réacteur 100 est comprise entre 500°C et 600°C. La pression au sein du réacteur de 25,6 MPa.

La composition volumique du mélange gazeux en sortie de réacteur est : 40±5% de H₂, 30±2% de CH₄ et 25±5% de CO₂.

Le procédé de gazéification a permis de transformer 89 % de la matière organique en gaz, tout en évitant les problèmes de bouchage du réacteur par les sels inorganiques.

## Revendications

1. Dispositif pour la gazéification en milieu supercritique d'un effluent aqueux contenant une matière organique et une matière minérale, le dispositif comprenant :
- un réacteur (100) comprenant un corps principal configuré pour être rempli d'eau,
- des moyens de régulation de la pression pour mettre le corps principal du réacteur (100) à une pression supérieure ou égale à 22,1 MPa,
- des moyens de chauffage (112) configuré pour chauffer une partie supérieure (110) du réacteur (100) à une température allant de 400°C à 800°C, de manière à avoir de l'eau à l'état supercritique,
- une entrée de l'effluent aqueux aboutissant dans la partie supérieure (110) du réacteur (100), de manière à transformer la matière organique de l'effluent aqueux en gaz,
- des moyens de refroidissement (123), disposés autour du corps principal du réacteur (100), configurés pour refroidir une partie inférieure (120) du réacteur (100), la partie inférieure (120) du réacteur étant refroidie selon un gradient thermique allant d'une première température inférieure ou égale à celle de la partie supérieure (110) du réacteur (100) et supérieure ou égale à 374°C pour avoir de l'eau à l'état supercritique à une deuxième température inférieure à 374°C, de manière à avoir de l'eau à l'état liquide et solubiliser la matière minérale,
- une sortie d'un mélange eau/gaz (121), positionnée au niveau de la partie inférieure (120) du réacteur (100) à une température inférieure ou égale à celle de la partie supérieure (110) du réacteur et supérieure ou égale à 374°C pour avoir de l'eau à l'état supercritique,
- une sortie de liquide (122), positionnée au niveau de la partie inférieure (120) du réacteur (100), refroidie à une température inférieure à 374°C de manière à évacuer du réacteur (100) une saumure contenant la matière minérale solubilisée et de l'eau à l'état liquide,
la partie supérieure (110) et la partie inférieure (120) du réacteur (100) étant tubulaires et disposées co-axialement.

2. Dispositif selon la revendication 1, **caractérisé en ce que** la partie inférieure (120) comprend une zone inférieure et une zone supérieure, séparées par une zone centrale, et ce que le dispositif comprend des moyens de guidage (124) entre la partie supérieure (110) et la partie inférieure (120) du réacteur (100), de manière à ce que le gaz et la matière minérale arrivent dans la partie inférieure (120) du réacteur (100) au niveau de la zone centrale, configurée pour être à une température allant de 250°C à 500°C.

3. Dispositif selon l'une des revendications 1 et 2, **caractérisé en ce que** la sortie de mélange eau/gaz (121) est reliée à un système de séparation haute pression (300), le système de séparation haute pression (300) étant de préférence relié à un système de séparation basse pression (310).

4. Dispositif selon la revendication 3, **caractérisé en ce qu'**un échangeur thermique est disposé entre la sortie de mélange eau/gaz (121) et le système de séparation haute pression (300).

5. Dispositif selon l'une quelconque des revendications précédentes, **caractérisé en ce que** le réacteur (100) comprend une canne d'injection (111) traversant la partie inférieure (120) du réacteur (100) et aboutissant dans la partie supérieure (110) du réacteur (100) de manière à injecter l'effluent aqueux dans la partie supérieure (110) du réacteur (100).

6. Dispositif selon l'une quelconque des revendications 1 à 5, **caractérisé en ce qu'**il est dépourvu de moyens d'agitation.

7. Procédé de gazéification en milieu supercritique d'un effluent aqueux contenant une matière organique et une matière minérale, le procédé comprenant les étapes successives suivantes :
a) fourniture d'un dispositif tel que défini dans l'une quelconque des revendications 1 à 6, le réacteur (100) étant rempli d'eau, à une pression supérieure ou égale à 22,1 MPa,
b) chauffage de la partie supérieure (110) du réacteur (100), à une température allant de 400°C à 800°C, de manière à avoir de l'eau supercritique et,
c) refroidissement de la partie inférieure (120) du réacteur (100), de manière à avoir, dans la partie inférieure (120) du réacteur (100), un gradient thermique allant d'une première température inférieure ou égale à celle de la partie supérieure (110) du réacteur (100) et supérieure ou égale à 374°C pour avoir de l'eau à l'état supercritique à une deuxième température inférieure à 374°C, de manière à avoir de l'eau à l'état liquide et solubiliser la matière minérale, au niveau de la sortie de liquide (122),
d) injection de l'effluent aqueux dans la partie supérieure (110) du réacteur (100), de manière à gazéifier la matière organique, la matière minérale précipitant dans la partie supérieure (110) du réacteur (100) et tombant par gravité dans la partie inférieure (120) du réacteur (100), où elle est resolubilisée pour former une saumure,
e) récupération des gaz par la sortie de mélange eau/gaz (121).

8. Procédé selon la revendication 7, **caractérisé en ce que** le procédé comporte une étape additionnelle dans laquelle la saumure est évacuée par la sortie de liquide (122).

9. Procédé selon l'une des revendications 7 et 8, **caractérisé en ce que** lors de l'étape b), la partie supérieure (110) est chauffée à une température allant de 500°C à 700°C, et de préférence de 600°C à 700°C.

10. Procédé selon l'une des revendications 7 à 9, **caractérisé en ce que** lors de l'étape b), la partie inférieure (120) du réacteur est refroidie au niveau de la sortie de liquide (122) à une température inférieure à 350°C, et de préférence inférieure à 250°C, par exemple à une température de 20°C à 250°C.

11. Procédé selon l'une quelconque des revendications 7 à 10, caractérisé que le réacteur (100) comprend un catalyseur.

12. Procédé selon l'une quelconque des revendications 7 à 11, **caractérisé en ce qu'**un oxydant, tel que de l'air ou de l'oxygène, est injecté dans la partie supérieure (110) du réacteur (100) de manière à réaliser une réaction d'oxydation hydrothermale au moins partielle de la matière organique de l'effluent aqueux.

13. Procédé selon l'une quelconque des revendications 7 à 10, **caractérisé en ce que** la gazéification est réalisée sans catalyseur, sans oxydant et sans agent de précipitation.

14. Procédé selon l'une quelconque des revendications 7 à 13, **caractérisé en ce que** la sortie de mélange eau/gaz (121) est reliée à un système de séparation, pour séparer l'eau du gaz, et **en ce que** l'eau est récupérée en sortie du système de séparation pour être réinjectée dans le réacteur en mélange avec l'effluent aqueux.

15. Procédé selon l'une quelconque des revendications 7 à 14, **caractérisé en ce que** la sortie de mélange eau/gaz (121) est reliée à un échangeur thermique et **en ce que** la chaleur récupérée de l'échangeur thermique est utilisée pour chauffer l'effluent aqueux à une température maximale de 350°C et de préférence à une température maximale de 250°C.

16. Procédé selon l'une quelconque des revendications 7 à 15, **caractérisé en ce que** l'effluent aqueux comprend de 75 % à 95 % massique d'eau, de 5 % à 25 % massique de matière organique et jusqu'à 30 g/L de matière minérale.

17. Procédé selon l'une quelconque des revendications 7 à 16, **caractérisé en ce que** la viscosité de l'effluent aqueux va de 1 à 1000 mPa.s et/ou la masse volumique de l'effluent va de 0,8 à 1,5 g/cm³, et de préférence de 0,8 à 1,3g/cm³.

18. Procédé selon l'une quelconque des revendications 7 à 17, **caractérisé en ce que** l'effluent aqueux est une boue de stations d'épuration, une liqueur noire, une solution comprenant des algues, de la vinasse, ou un résidu de l'industrie agroalimentaire tel que le lactosérum.

## Patentansprüche

1. Vorrichtung zum Vergasen, in überkritischem Medium, eines wässrigen Abwassers, das ein organisches Material und ein anorganisches Material enthält, wobei die Vorrichtung umfasst:
- einen Reaktor (100), der einen Hauptkörper umfasst, der konfiguriert ist, um mit Wasser gefüllt zu werden,
- Mittel zum Regeln des Drucks, um den Hauptkörper des Reaktors (100) auf einen Druck von größer oder gleich 22,1 MPa zu bringen,
- Heizmittel (112), die konfiguriert sind, um einen oberen Teil (110) des Reaktors (100) auf eine Temperatur von 400°C bis 800°C zu erhitzen, um über Wasser im überkritischen Zustand zu verfügen,
- einen Einlass für das wässrige Abwasser, der in den oberen Teil (110) des Reaktors (100) mündet, um das organische Material des wässrigen Abwassers in Gas umzuwandeln,
- um den Hauptkörper des Reaktors (100) herum angeordnete Kühlmittel (123), die konfiguriert sind, um einen unteren Teil (120) des Reaktors (100) zu kühlen, wobei der untere Teil (120) des Reaktors gemäß einem thermischen Gradienten von einer ersten Temperatur kleiner oder gleich derjenigen des oberen Teils (110) des Reaktors (100) und größer oder gleich 374°C, um über Wasser im überkritischen Zustand zu verfügen, auf eine zweite Temperatur kleiner 374°C gekühlt wird, um über Wasser im flüssigen Zustand zu verfügen und das anorganische Material zu solubilisieren,
- einen im Bereich des unteren Teils (120) des Reaktors (100) positionierten Auslass für ein Wasser/Gas-Gemisch (121) auf einer Temperatur kleiner oder gleich derjenigen des oberen Teils (110) des Reaktors und größer oder gleich 374°C, um über Wasser im überkritischen Zustand zu verfügen,
- einen im Bereich des unteren Teils (120) des Reaktors (100) positionierten Flüssigkeitsauslass (122), der auf eine Temperatur kleiner 374°C gekühlt wird, um eine Sole, die das solubilisierte anorganische Material und Wasser im flüssigen Zustand enthält, aus dem Reaktor (100) abzuleiten,
wobei der obere Teil (110) und der untere Teil (120) des Reaktors (100) rohrförmig und koaxial angeordnet sind.

2. Vorrichtung nach Anspruch 1, **dadurch gekennzeichnet, dass** der untere Teil (120) eine untere Zone und eine obere Zone umfasst, die durch eine zentrale Zone getrennt sind, und dass die Vorrichtung Führungsmittel (124) zwischen dem oberen Teil (110) und dem unteren Teil (120) des Reaktors (100) umfasst, sodass das Gas und das anorganische Material im Bereich der zentralen Zone, die konfiguriert ist, um sich auf einer Temperatur von 250°C bis 500°C zu befinden, in den unteren Teil (120) des Reaktors (100) gelangen.

3. Vorrichtung nach einem der Ansprüche 1 und 2, **dadurch gekennzeichnet, dass** der Auslass für Wasser/Gas-Gemisch (121) mit einem Hochdruck-Trennsystem (300) verbunden ist, wobei das Hochdruck-Trennsystem (300) bevorzugt mit einem Niederdruck-Trennsystem (310) verbunden ist.

4. Vorrichtung nach Anspruch 3, **dadurch gekennzeichnet, dass** zwischen dem Auslass für Wasser/Gas-Gemisch (121) und dem Hochdruck-Trennsystem (300) ein Wärmetauscher angeordnet ist.

5. Vorrichtung nach einem der vorstehenden Ansprüche, **dadurch gekennzeichnet, dass** der Reaktor (100) ein Einspritzrohr (111) umfasst, das durch den unteren Teil (120) des Reaktors (100) verläuft und in den oberen Teil (110) des Reaktors (100) mündet, um das wässrige Abwasser in den oberen Teil (110) des Reaktors (100) einzuspritzen.

6. Vorrichtung nach einem der Ansprüche 1 bis 5, **dadurch gekennzeichnet, dass** sie keine Rührmittel besitzt.

7. Verfahren zum Vergasen, in überkritischem Medium, eines wässrigen Abwassers, das ein organisches Material und ein anorganisches Material enthält, wobei das Verfahren die folgenden aufeinanderfolgenden Schritte umfasst:
a) Bereitstellen einer Vorrichtung, wie in einem der Ansprüche 1 bis 6 definiert, wobei der Reaktor (100) mit Wasser auf einen Druck von größer oder gleich 22,1 MPa gefüllt wird,
b) Erhitzen des oberen Teils (110) des Reaktors (100) auf eine Temperatur von 400°C bis 800°C, um über überkritisches Wasser zu verfügen, und
c) Kühlen des unteren Teils (120) des Reaktors (100), um im unteren Teil (120) des Reaktors (100) über einen thermischen Gradienten von einer ersten Temperatur kleiner oder gleich derjenigen des oberen Teils (110) des Reaktors (100) und größer oder gleich 374°C, um über Wasser im überkritischen Zustand zu verfügen, auf eine zweite Temperatur kleiner 374°C zu verfügen, um im Bereich des Flüssigkeitsauslasses (122) über Wasser im flüssigen Zustand zu verfügen und das anorganische Material zu solubilisieren,
d) Einspritzen des wässrigen Abwassers in den oberen Teil (110) des Reaktors (100), um das organische Material zu vergasen, wobei das anorganische Material im oberen Teil (110) des Reaktors (100) ausfällt und durch Schwerkraft in den unteren Teil (120) des Reaktors (100) fällt, wo es erneut solubilisiert wird, um eine Sole zu bilden,
e) Rückgewinnen der Gase durch den Auslass für Wasser/Gas-Gemisch (121).

8. Verfahren nach Anspruch 7, **dadurch gekennzeichnet, dass** das Verfahren einen zusätzlichen Schritt umfasst, bei dem die Sole durch den Flüssigkeitsauslass (122) abgeleitet wird.

9. Verfahren nach einem der Ansprüche 7 und 8, **dadurch gekennzeichnet, dass** bei Schritt b) der obere Teil (110) auf eine Temperatur von 500°C bis 700°C, und bevorzugt von 600°C bis 700°C, erhitzt wird.

10. Verfahren nach einem der Ansprüche 7 bis 9, **dadurch gekennzeichnet, dass** bei Schritt b) der untere Teil (120) des Reaktors im Bereich des Flüssigkeitsauslasses (122) auf eine Temperatur kleiner 350°C, und bevorzugt kleiner 250°C, zum Beispiel auf eine Temperatur von 20°C bis 250°C, gekühlt wird.

11. Verfahren nach einem der Ansprüche 7 bis 10, **dadurch gekennzeichnet, dass** der Reaktor (100) einen Katalysator umfasst.

12. Verfahren nach einem der Ansprüche 7 bis 11, **dadurch gekennzeichnet, dass** ein Oxidationsmittel, wie etwa Luft oder Sauerstoff, in den oberen Teil (110) des Reaktors (100) eingespritzt wird, um eine mindestens teilweise hydrothermale Oxidationsreaktion des organischen Materials des wässrigen Abwassers durchzuführen.

13. Verfahren nach einem der Ansprüche 7 bis 10, **dadurch gekennzeichnet, dass** die Vergasung ohne Katalysator, ohne Oxidationsmittel und ohne Fällungsmittel durchgeführt wird.

14. Verfahren nach einem der Ansprüche 7 bis 13, **dadurch gekennzeichnet, dass** der Auslass für Wasser/Gas-Gemisch (121) mit einem Trennsystem verbunden ist, um das Wasser vom Gas zu trennen, und dadurch, dass das Wasser am Auslass des Trennsystems rückgewonnen wird, um als Gemisch mit dem wässrigen Abwasser wieder in den Reaktor eingespritzt zu werden.

15. Verfahren nach einem der Ansprüche 7 bis 14, **dadurch gekennzeichnet, dass** der Auslass für Wasser/Gas-Gemisch (121) mit einem Wärmetauscher verbunden ist und dadurch, dass die vom Wärmetauscher zurückgewonnene Wärme verwendet wird, um das wässrige Abwasser auf eine maximale Temperatur von 350°C und bevorzugt auf eine maximale Temperatur von 250°C zu erhitzen.

16. Verfahren nach einem der Ansprüche 7 bis 15, **dadurch gekennzeichnet, dass** das wässrige Abwasser 75 Masse-% bis 95 Masse-% Wasser, 5 Masse-%bis 25 Masse-% organisches Material und bis zu 30 g/L anorganisches Material umfasst.

17. Verfahren nach einem der Ansprüche 7 bis 16, **dadurch gekennzeichnet, dass** die Viskosität des wässrigen Abwassers 1 bis 1000 mPa.s beträgt und/oder die Dichte des Abwassers 0,8 bis 1,5 g/cm³ und bevorzugt 0,8 bis 1,3 g/cm³ beträgt.

18. Verfahren nach einem der Ansprüche 7 bis 17, **dadurch gekennzeichnet, dass** das wässrige Abwasser ein Schlamm aus Kläranlagen, eine Schwarzlauge, eine Lösung, die Algen umfasst, Schlempe oder ein Rückstand aus der Lebensmittelindustrie wie etwa Molke ist.

## Claims

1. Device for the gasification in a supercritical medium of an aqueous effluent containing an organic matter and an inorganic matter, the device comprising:
- a reactor (100) comprising a main body designed to be filled with water,
- pressure regulation means for pressurising the main body of the reactor (100) to a pressure greater than or equal to 22.1 MPa,
- heating means (112) designed to heat an upper part (110) of the reactor (100) to a temperature ranging from 400°C to 800°C, so as to obtain water in the supercritical state,
- an aqueous effluent inlet leading into the upper part (110) of the reactor (100), so as to convert the organic matter of the aqueous effluent into gas,
- cooling means (123), arranged around the main body of the reactor (100), designed to cool a lower part (120) of the reactor (100), the lower part (120) of the reactor being cooled according to a thermal gradient ranging from a first temperature lower than or equal to that of the upper part (110) of the reactor (100) and greater than or equal to 374°C in order to obtain water in the supercritical state to a second temperature lower than 374°C, so as to obtain water in the liquid state and solubilise the inorganic matter,
- a water-gas mixture outlet (121), positioned at the lower part (120) of the reactor (100) at a temperature lower than or equal to that of the upper part (110) of the reactor and greater than or equal to 374°C in order to obtain water in the supercritical state,
- a liquid outlet (122), positioned at the lower part (120) of the reactor (100), cooled to a temperature lower than 374°C so as to discharge from the reactor (100) a brine containing the solubilised inorganic matter and water in the liquid state, the upper part (110) and the lower part (120) of the reactor (100) being tubular and arranged coaxially.

2. Device according to claim 1, **characterised in that** the lower part (120) comprises a lower area and an upper area, separated by a central area, and **in that** the device comprises guide means (124) between the upper part (110) and the lower part (120) of the reactor (100), such that the gas and the inorganic matter reach the lower part (120) of the reactor (100) at the central area, designed to be at a temperature ranging from 250°C to 500°C.

3. Device according to any one of claims 1 to 2, **characterised in that** the water-gas mixture outlet (121) is connected to a high-pressure separation system (300), the high-pressure separation system (300) preferably being connected to a low-pressure separation system (310).

4. Device according to claim 3, **characterised in that** a heat exchanger is arranged between the water-gas mixture outlet (121) and the high-pressure separation system (300).

5. Device according to any one of the preceding claims, **characterised in that** the reactor (100) comprises an injection pipe (111) passing through the lower part (120) of the reactor (100) and ending in the upper part (110) of the reactor (100) so as to inject the aqueous effluent into the upper part (110) of the reactor (100).

6. Device according to any one of claims 1 to 5, **characterised in that** it does not have any agitation means.

7. Method for the gasification in a supercritical medium of an aqueous effluent containing an organic matter and an inorganic matter, the method comprising the following consecutive steps:
a) supplying a device as defined in any one of claims 1 to 6, the reactor (100) being filled with water, at a pressure greater than or equal to 22.1 MPa,
b) heating the upper part (110) of the reactor (100), to a temperature ranging from 400°C to 800°C, so as to obtain supercritical water and,
c) cooling the lower part (120) of the reactor (100), so as to obtain, in the lower part (120) of the reactor (100), a thermal gradient ranging from a first temperature lower than or equal to that of the upper part (110) of the reactor (100) and greater than or equal to 374°C in order to obtain water in the supercritical state to a second temperature lower than 374°C, so as to obtain water in the liquid state and solubilise the inorganic matter, at the liquid outlet (122),
d) injecting the aqueous effluent into the upper part (110) of the reactor (100), so as to gasify the organic matter, the inorganic matter precipitating in the upper part (110) of the reactor (100) and falling by gravity into the lower part (120) of the reactor (100), where it is resolubilised to form a brine,
e) recovering the gases through the water-gas mixture outlet (121).

8. Method according to claim 7, **characterised in that** the method includes an additional step in which the brine is discharged via the liquid outlet (122).

9. Method according to any one of claims 7 to 8, **characterised in that** during step b), the upper part (110) is heated to a temperature ranging from 500°C to 700°C, preferably from 600°C to 700°C.

10. Method according to any one of claims 7 to 9, **characterised in that** during step b), the lower part (120) of the reactor is cooled at the liquid outlet (122) to a temperature lower than 350°C, and preferably lower than 250°C, for example to a temperature of 20°C to 250°C.

11. Method according to any one of claims 7 to 10, **characterised in that** the reactor (100) comprises a catalyst.

12. Method according to any one of claims 7 to 11, **characterised in that** an oxidant, such as air or oxygen, is injected into the upper part (110) of the reactor (100) so as to carry out an at least partial hydrothermal oxidation reaction of the organic matter of the aqueous effluent.

13. Method according to any one of claims 7 to 10, **characterised in that** the gasification is carried out without a catalyst, without an oxidant and without a precipitating agent.

14. Method according to any one of claims 7 to 13, **characterised in that** the water-gas mixture outlet (121) is connected to a separation system, to separate the water from the gas, and **in that** the water is recovered at the outlet of the separation system in order to be re-injected into the reactor mixed with the aqueous effluent.

15. Method according to any one of claims 7 to 14, **characterised in** the water-gas mixture outlet (121) is connected to a heat exchanger and **in that** the heat recovered from the heat exchanger is used to heat the aqueous effluent to a maximum temperature of 350°C and preferably to a maximum temperature of 250°C.

16. Method according to any one of claims 7 to 15, **characterised in that** the aqueous effluent comprises from 75% to 95% by weight of water, from 5% to 25% by weight of organic matter and up to 30 g/L of inorganic matter.

17. Method according to any one of claims 7 to 16, **characterised in that** the viscosity of the aqueous effluent ranges from 1 to 1000 mPa.s and/or the density of the effluent ranges from 0.8 to 1.5 g/cm³, and preferably from 0.8 to 1.3 g/cm³.

18. Method according to any one of claims 7 to 17, **characterised in that** the aqueous effluent is a wastewater treatment plant sludge, a black liquor, a solution comprising algae, vinasse, or a residue from the agri-food industry such as whey.
